# EUROPÄISCHE PATENTSCHRIFT

(11) **EP 0 348 831 B1**
(45) Veröffentlichungstag und Bekanntmachung des Hinweises auf die Patenterteilung: **16.02.1994**
(21) Anmeldenummer: 89111432.4
(22) Anmeldetag: 23.06.1989
(51) Int. Cl.: B29C 67/14

(54) **Verfahren und Vorrichtung zur Herstellung von Formteilen aus aushärtbarem Kunststoff**
Method and apparatus for producing moulded parts from curable plastic material
Procédé et appareil de fabrication de corps moulés en matière plastique durcissable

(30) Priorität: 29.06.1988 DE 3821941
(43) Veröffentlichungstag der Anmeldung: 03.01.1990
(73) Patentinhaber: Weigel, Angela, D-57629 Atzelgift (DE); Weigel, Claus, D-57629 Atzelgift (DE); Weigel, Susanne, D-57629 Atzelgift (DE)
(72) Erfinder: Weigel, Jürgen, D-5239 Atzelgift (DE)
(74) Vertreter: Kossobutzki, Walter, Dipl.-Ing.(FH)

(56) Entgegenhaltungen:
- EP-A- 0 017 452
- EP-A- 0 322 042
- WO-A-89/00495
- WO-A-89/09686
- DE-A- 2 162 174
- DE-A- 3 206 905
- FR-A- 1 504 274
- FR-A- 1 527 814
- GB-A- 1 024 582
- US-A- 2 913 036
- US-A- 4 560 523
- US-A- 4 952 135
- PATENT ABSTRACTS OF JAPAN, Band 10, Nr. 18 (M-448)[2075], 24. Januar 1986;& JP-A-60 176 746 (HITACHI) 10-09-1985

## Beschreibung

Die Erfindung bezieht sich auf ein Verfahren zur Herstellung eines verhältnismäßig dünnwandigen und großflächigen Formteiles aus aushärtbarem, insbesondere laminiertem Werkstoff, beispielsweise Kunststoff, bei dem der Werkstoff in einen geschlossenen, zumindest von einer dehnfähigen Folie und einer Positiv- und/oder Negativform begrenzten Formraum eingefüllt und in demselben durch Vakuum und/oder Druck gleichmäßig über die Formfläche verteilt wird sowie auf eine Vorrichtung zur Durchführung des Verfahrens.

Aus der DE-A-32 06 905 ist ein Verfahren zur Herstellung von verstärkten Formteilen aus laminiertem Werkstoff, beispielsweise Kunststoff bekannt, bei dem auf die Formfläche einer Positiv- oder Negativform eine dehnbare Folie, die gegen die chemischen Einflüsse des Werkstoffes sowie gegen die thermischen und mechanischen Beanspruchungen des Formvorganges resistent ist, aufgelegt bzw. aufgespannt wird. Sodann wird auf dieser Folie eine Schicht aus Fasermatten, beispielsweise Glaserfaser- oder Kohlenstoffasermatten aufgebaut, die zur Bildung der eigentlichen Tragschicht des Formteiles dient. Nach der Herstellung dieser Tragschicht wird auf derselben eine zweite Folie aufgelegt, die aus dem gleichen Werkstoff wie die erste Folie besteht und die im Randbereich außerhalb des zu fertigenden Formteiles mit der ersten Folie dicht verbunden bzw. mit dieser zusammen eingespannt ist. Vor dem endgültigen Verschließen dieser beiden Folien wird zwischen dieselben eine vorbestimmte Menge eines aushärtbaren Kunststoffes eingefüllt, der sich nach dem Anlegen von Vakuum an den Formraum gleichmäßig über die Formfläche verteilt und der nach seiner Aushärtung die Tragschicht des Formteiles bildet. Bedarfsweise ist es möglich, den auszuhärtenden Kunststoff auch nachträglich zwischen die beiden dichtend miteinander verbundenen Folien einzuführen und durch Vakuum und/oder Druck im Formraum bzw. über die Formfläche zu verteilen.

Bei diesem und anderen bekannten Verfahren zur Herstellung von Formteilen aus aushärtbarem, laminiertem Werkstoff sind nur dann einwandfreie Formteile zu erzielen, wenn sichergestellt ist bzw. erreicht wird, daß der Werkstoff in alle Bereiche des Formteiles gelangt und alle Fasermatten einwandfrei mit Kunststoff getränkt werden. Dies ist dann, wenn die Formteile verhältnismäßig dünnwandig und großflächig sind, nur schwierig zu erreichen. Dazu ist es erforderlich, beispielsweise zwischen zwei Fasermatten eine besondere Fließzone auszubilden, die beispielsweise aus einer Sisalmatte, einem Drahtgewebe, Glasfilament, Endlosglasmatte oder einem PUR-Gespinst besteht. Durch diese besondere Fließzone erhöht sich zwangsläufig aber wieder die Wandstärke des Formteiles. Andererseits bringt diese Fließzone mit sich, daß aus Kunststoff hergestellte Formteile nicht transparent sind.

Aus dem Dokument EP-A-0 322 042 ist es bei der Herstellung von faserverstärkten Formteilen bekannt, von der Innenwand der Form mindestens eine nach außen verlaufende Öffnung vorzusehen, die in ihrer Grundfläche länglich ausgebildet sein kann. In diese Öffnung wird ein hohles, elastisch verformbares Füllstück eingesetzt, welches mit seiner zum Formhohlraum gerichteten Außenfläche sich in einer Ebene mit der Innenwandung der Form befindet. Das hohle Füllstück besitzt eine Flüssigkeitskammer, die über ein nach außen geführtes Rohr mit einer Pumpe verbunden ist. Diese Kammer ist normalerweise immer mit Flüssigkeit gefüllt. Wird nun Flüssigkeit aus der Kammer des Füllstückes abgezogen, verformt sich die in der Formfläche befindliche Wandung des Füllstückes in Richtung auf die Flüssigkeitskammer, so daß ein Kanal entsteht, über den eine bessere und damit schnellere Verteilung des Kunstharzes im Formhohlraum möglich ist. Nach der Füllung des Formhohlraumes wird diese Wandung des Füllstückes wieder in ihre Ausgangslage in der Formebene bewegt. Die hier erzielbaren Kanalquerschnitte sind verhältnismäßig gering. Die Länge dieser Kanäle kann nur verhältnismäßig kurz sein, da sonst keine einwandfreie Verformung der Formwand des Füllstückes sichergestellt ist. Trotz dieser Maßnahmen ist die Verteilung des aushärtbaren, flüssigen Kunststoffes noch unbefriedigend und dauert verhältnismäßig lange. Der mit der Herstellung der Füllstücke und deren Anordnung in der Form verbundene Aufwand ist beträchtlich.

Der Erfindung liegt deshalb die Aufgabe zugrunde, ein Verfahren zur Herstellung eines verhältnismäßig dünnwandigen und großflächigen Formteiles aus aushärtbarem, insbesondere laminiertem Werkstoff, beispielsweise Kunststoff aufzuzeigen, durch welches auch bei sehr geringen Wandstärken sichergestellt ist, daß der Werkstoff sich gut, insbesondere aber in der zur Verfügung stehenden Zeit, und gleichmäßig über die Formfläche verteilt, so daß insbesondere eingelegte Fasermatten oder geschnetzelte Glasfasern einwandfrei getränkt werden. Des weiteren soll eine Vorrichtung geschaffen werden, mit der dieses Verfahren durchführbar ist.

Zur Lösung dieser Aufgabe wird gemäß der Erfindung bei einem Verfahren der eingangs beschriebenen Gattung vorgeschlagen, daß in einer mit verteilten Nuten versehenen Positiv- und/oder Negativform die an derselben formschlüssig anliegende Folie durch Druck und/oder Vakuum zumindest teilweise in die Nuten eingezogen wird und Strömungskanäle gebildet werden, daß der Werkstoff über die Strömungskanäle unter Druck und/oder Vakuum gleichmäßig in den Formraum eingefüllt und über die Formfläche verteilt wird und daß am Ende des Verteilungs- bzw. Formgebungsvorganges die in den Nuten eingezogene Trägerfolie durch Druck und/oder Vakuum in die Ebene der Formfläche zurückbewegt wird.

Unter dem Begriff Positivform ist eine Form zu verstehen, bei der die das Laminat und den flüssigen, aushärtbaren Kunststoff aufnehmende Formteil nach außen gewölbt bzw. erhaben ausgebildet ist. Bei einer sogenannten Negativform ist in dem entsprechenden Formteil eine Vertiefung bzw. Mulde vorgesehen.

Ein solches Verfahren stellt sicher, daß sehr dünne, insbesondere verstärkte Formteile einwandfrei hergestellt werden können. Bei der Verwendung von Kunststoff als aushärtbarem Werkstoff können transparente Formteile mit äußerst dünner Wandstärke, beispielsweise unter 1,0 mm, erreicht werden.

Weitere Merkmale des Verfahrens gemäß der Erfindung sowie einer Vorrichtung zur Durchführung des Verfahrens sind in den Ansprüchen 2 - 13 offenbart.

Die Erfindung wird nachfolgend anhand eines in einer Zeichnung in vereinfachter, nicht maßstabsgetreu dargestellte Ausführungsbeispieles näher erläutert. Dabei zeigen
- Fig. 1: einen Schnitt durch eine Vorrichtung zur Durchführung des Verfahrens gemäß der Erfindung in der Grundstellung,
- Fig. 2: die Vorrichtung der Fig. 1 in der Fließstellung und
- Fig. 3: eine Draufsicht auf eine positiv oder negativ ausgebildete Form.

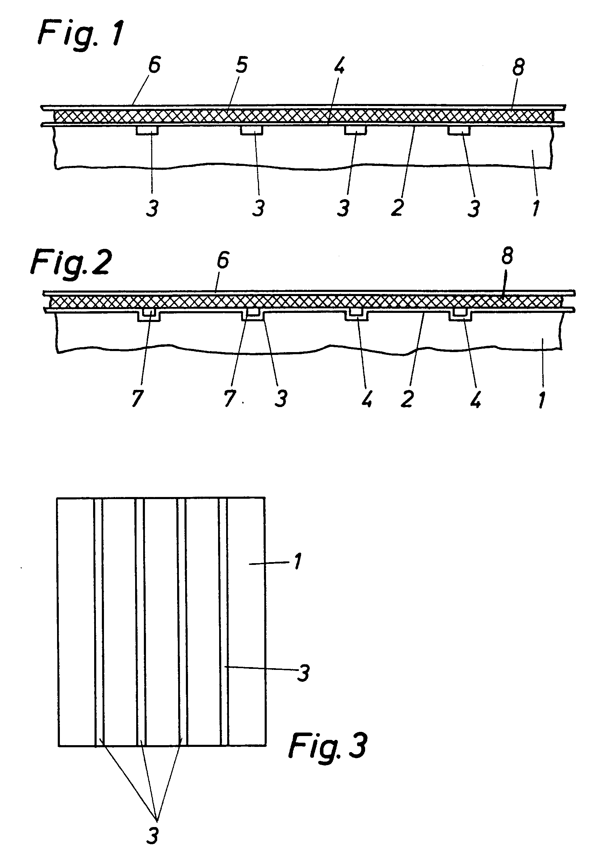

In der Zeichnung ist eine beispielsweise aus Holz bestehende Form 1 gezeigt, deren Formfläche 2 zur Vereinfachung der Darstellung als ebene Fläche ausgebildet ist. Dabei zeigen die Figuren nur den mittleren bzw. inneren Bereich der Form 1, die außen mit einem nicht dargestellten Rand versehen sein kann. In die Formfläche 2 sind mehrere Nuten 3 eingearbeitet, die in diesem Ausführungsbeispiel rechteckigen Querschnitt besitzen. Dabei verlaufen hier die Nuten 3 mit einem vorgegebenen Abstand parallel zueinander (Fig. 3). Die Form und die Größe des Querschnittes der Nuten 3 kann weitgehend beliebig gewählt werden. Aufgrund durchgeführter Versuche sollte der Querschnitt einer solchen Nut 3 jedoch mindestens 4 qmm betragen. Eine Größe über 40 qmm dürfte unzweckmäßig sein.

Auf die mit den Nuten 3 versehene Formfläche wird sodann eine Folie 4 aufgelegt, die aus transparentem, sowie für Licht, UV- und IR-Strahlen durchlässigem Kunststoff besteht. Zusätzlich muß diese Folie 4 gut dehnbar, insbesondere aber gut rückstellbar sein. Die Folie 4 ist so groß ausgebildet, daß sie über den nicht dargestellten Rand der Form 1 hinausragt. Danach wird auf der Folie 4 eine aus Fasermatten, beispielsweise Glasfaser- oder Kohlenstoffmatten bestehende Armierung 5 trocken aufgebaut. Dabei kann die Armierung 5 aus einer oder mehreren Fasermatten bestehen. Diese Armierung 5 endet am Rand der Form 1. Sodann wird auf der Armierung 5 eine Folie 6 aufgebracht, die aus dem gleichen Werkstoff wie die Folie 4 besteht. Auch diese Folie 6 ragt über den Rand der Form 1 hinaus. Im Bereich des Randes werden die beiden Folien 4,6 sodann dichtend miteinander verbunden bzw. verspannt.

Im Bereich der Nuten 3 münden in der Zeichnung nicht dargestellte Kanäle, die nach außen geführt und dort an eine Vakuumeinrichtung angeschlossen sind. Sobald über diese Kanäle an die Nuten 3 ein Vakuum angelegt wird, führt dies dazu, daß sich die Folie 4 verformt und in die Nuten 3 einzieht, wie dies in Fig. 2 dargestellt ist. Dabei ist es auch möglich, die Folie 4 vor dem Aufbringen der Armierung 5 an der Oberseite bzw. der freien Fläche mit Druck zu beaufschlagen, so daß die Folie 4 in die Nuten 3 gedrückt wird. Ein vollständiges bzw. formschlüssiges Ausfüllen der Nuten 3 durch die Folie 4 ist nicht unbedingt erforderlich.

Sobald die Folie 4 die in Figur 2 gezeigte Lage in den Nuten 3 eingenommen hat, wird über Öffnungen im nicht dargestellten Rand der Form 1 aushärtbarer Werkstoff, beispielsweise Kunststoff, in die von der verformten Folie 4 gebildeten Strömungskanäle 7 eingeleitet. Dieser Kunststoff kann entweder durch Druck in diesen Strömungskanälen 7 geführt und damit über die Formfläche 2 in die Armierung 5 verteilt werden. Bedarfsweise ist es auch möglich, an den von den Folien 4,6 begrenzten Formraum 8 ein Vakuum anzulegen, so daß der aushärtbare Kunststoff zunächst in die Strömungskanäle 7 gezogen und von hier über die Formfläche 2 in die Armierung 5 verteilt wird. Ferner ist es möglich, daß gleichzeitig Druck und Vakuum wirksam sind. Durch die Strömungskanäle 7 ist sichergestellt, daß der aushärtbare Kunststoff den Formraum 8 vollständig ausfüllt, so daß die Armierung 5 vollkommen durchtränkt ist. Bedarfsweise können die Kanäle, über die Vakuum an den Formraum 8 angelegt werden kann, auch als Überlaufkanäle ausgebildet sein.

Sobald sichergestellt ist, daß der Formraum 8 vollständig mit aushärtbarem Kunststoff gefüllt ist, wird das an die Nuten 3 angelegte Vakuum aufgehoben. Dadurch stellt sich die Folie 4 wieder in ihre Ausgangslage gemäß Fig. 1 zurück. Diese Rückstellung wird dabei noch durch das Vakuum unterstützt, welches an den Formraum 8 angelegt ist. Sobald sichergestellt ist, daß die Folie 4 wieder ihre Ausgangslage gemäß Fig. 1 eingenommen hat, kann, wenn es sich nicht um plane Formteile handelt, zunächst eine Deformation der noch nicht ausgehärteten Armierung 5 bzw. des Laminats in entgegengesetzter Richtung der Form 1 erfolgen, und anschließend der Aushärtvorgang beginnen bzw. eingeleitet werden.

In Abänderung des erläuterten Ausführungsbeispieles ist es möglich, die Folie 6 durch ein Rohbauteil oder ein zusätzliches Teil der Form 1 zu ersetzen. Es ist nicht notwendig, daß die mit Kunststoff getränkte Armierung 5 in der Form 1 aushärtet. Diese vollkommen getränkte Armierung 5 kann mit den dazugehörigen Folien 4,6 in eine besondere Arbeitsform gelegt werden, in der das Folienpaket mit der getränkten Armierung 5 durch eine Art Tiefziehvorgang verformt wird. Für den Fall, daß der Form 1 ein oberes Teil zugeordnet ist, können in demselben auch Nuten 3 eingearbeitet sein, in die dann die Folie 6 eingezogen wird. Dadurch kann der Strömungsvorgang des Kunststoffes bzw. die Tränkung der Armierung 5 weiter verbessert werden. Dabei ist es auch möglich, zwei Formteile zu fertigen, die durch eine besondere Folie voneinander getränkt sind. Das erfindungsgemäße Verfahren ist auch dann anwendbar, wenn beispielsweise auf einem Rohbauteil aus faserverstärktem Kunststoff eine Deckschicht, die auch als Feinschicht oder Gelcoat bezeichnet wird, aufgebracht werden soll. Da eine solche Deckschicht äußerst dünn ist, wird auch hier durch die Strömungskanäle der Fließvorgang erleichtert und beschleunigt, so daß auch besonders große Flächen mit einer sehr dünnen Deckschicht aus einem modifizierten, flüssigen Kunstharz versehen werden können. Schließlich ist es möglich, die positive und/oder negative Form durch eine genutete Walze oder ein genutetes Transportband zu ersetzen, so daß ein im Querschnitt konstantes Formteil oder Halbzeug kontinuierlich gefertigt werden kann.

In Abänderung des erläuterten Ausführungsbeispieles ist es ferner möglich, die Nuten bzw. die Strömungskanäle 7 in einem besonderen Glas- oder Papiervlies auszubilden, welches in die Armierung 5 zwischen die Verstärkungsmatten eingebracht wird. Nach dem gleichmäßigen Verteilen des auszuhärtenden Kunststoffes werden dann die in dem getränkten Glas- oder Papiervlies gebildeten Nuten bzw. Strömungskanäle 7 durch Druck und/oder Vakuum verformt bzw. zusammengedrückt, so daß keine nennenswerte Beeinflussung der Wandstärke entsteht. Bedarfsweise kann ein solches Glas- oder Papiervlies auch zusätzlich zu der genuteten Form 1 verwendet werden.

## Patentansprüche

1. Verfahren zur Herstellung eines verhältnismäßig dünnwandigen und großflächigen Formteiles aus aushärtbarem, insbesondere laminiertem Werkstoff, beispielsweise Kunststoff, bei dem der Werkstoff in einen geschlossenen, zumindest von einer dehnfähigen Folie (4) und einer Positiv- und/oder Negativform (1) begrenzten Formraum (8) eingefüllt und in demselben durch Vakuum und/oder Druck gleichmäßig über die Formfläche verteilt wird,
dadurch gekennzeichnet,
daß in einer mit verteilten Nuten (3) versehenen Positiv- und/oder Negativform (1) die an derselben formschlüssig anliegende Folie (4) durch Druck und/oder Vakuum zumindest teilweise in die Nuten (3) eingezogen wird und Strömungskanäle (7) gebildet werden, daß der Werkstoff über die Strömungskanäle (7) unter Druck und/oder Vakuum gleichmäßig in den Formraum (8) eingefüllt und über die Formfläche verteilt wird und daß am Ende des Verteilungs- bzw. Formgebungsvorganges die in den Nuten (3) eingezogene Trägerfolie (4) durch Druck und/oder Vakuum in die Ebene der Formfläche zurückbewegt wird.

2. Verfahren nach Anspruch 2,
dadurch gekennzeichnet,
daß der Formraum (8) von einer Positiv- und einer Negativform (1) mit jeweils einer dehnfähigen Folie (4) begrenzt wird.

3. Verfahren nach Anspruch 1,
dadurch gekennzeichnet,
daß der Formraum (8) von einer dehnfähigen Folie (6) und einer Positiv- und/oder Negativform (1) mit einer dehnfähigen Folie (4) begrenzt wird.

4. Verfahren nach Anspruch 1,
dadurch gekennzeichnet,
daß der Formraum (8) von einem Rohbauteil und einer Positiv- und/oder Negativform (1) mit einer dehnfähigen Folie (4) begrenzt wird.

5. Vorrichtung zur Herstellung eines verhältnismäßig dünnwandigen und großflächigen Formteiles aus aushärtbarem, insbesondere laminiertem Werkstoff, beispielsweise Kunststoff, bestehend aus einer Positiv- und/oder Negativform (1) und mindestens einer dehnfähigen Folie (4) zur Bildung eines geschlossenen, mit Vakuum und/oder Druck beaufschlagbaren Formraumes (8) zur Aufnahme des Werkstoffes, insbesondere zur Durchführung des Verfahrens nach mindestens einem der Ansprüche 1 - 4,
dadurch gekennzeichnet,
daß die Positiv- und/oder die Negativform (1) mit mehreren über die Formfläche (2) verteilten Nuten (3) versehen ist und daß die Nuten (3) mit einer Vakuumeinrichtung zur Bildung von Strömungskanälen (7) innerhalb des von der Folie (4) begrenzten Formraumes (8) verbunden sind.

6. Vorrichtung nach Anspruch 5,
dadurch gekennzeichnet,
daß die Positiv- und/oder Negativform (1) durch ein Rohbauteil gebildet ist.

7. Vorrichtung nach Anspruch 5 oder 6,
dadurch gekennzeichnet,
daß die Nuten (3) rechteckigen, trapezförmigen, dreieckförmigen und/oder halbkreisförmigen Querschnitt aufweisen.

8. Vorrichtung nach mindestens einem der Ansprüche 5 - 7,
dadurch gekennzeichnet,
daß die Nuten (3) gleichmäßig verteilt über die Formfläche angeordnet sind.

9. Vorrichtung nach mindestens einem der Ansprüche 5 - 8,
dadurch gekennzeichnet,
daß die Nuten (3) parallel zueinander angeordnet sind.

10. Vorrichtung nach mindestens einem der Ansprüche 5 - 8,
dadurch gekennzeichnet,
daß die Nuten (3) kreisförmig angeordnet sind.

11. Vorrichtung nach mindestens einem der Ansprüche 5 - 10,
dadurch gekennzeichnet,
daß die Nuten (3) sternförmig angeordnet sind.

12. Vorrichtung nach mindestens einem der Ansprüche 5 - 11,
dadurch gekennzeichnet,
daß die Positiv- und/oder Negativform (1) durch eine genutete Walze gebildet ist.

13. Vorrichtung nach mindestens einem der Ansprüche 5 - 12,
dadurch gekennzeichnet,
daß die Positiv- und/oder Negativform (1) durch ein genutetes Transportband gebildet ist.

## Claims

1. A process for the production of a comparatively thin-walled and large-area moulding of hardenable, in particular laminated material, for example plastics material, in which the material is introduced into a closed mould cavity (8) which is delimited at least by a stretchable foil (4) and a positive and/or negative mould (1), and uniformly distributed therein over the mould surface by vacuum and/or pressure, characterised in that in a positive and/or negative mould (1) provided with distributed grooves (3) the foil (4) which bears form-lockingly against the mould is at least partially drawn into the grooves (3) by pressure and/or vacuum and flow passages (7) are formed, that the material is uniformly introduced into the mould cavity (8) under pressure and/or vacuum by way of the flow passages (7) and distributed over the mould surface, and that at the end of the distribution and moulding operation the carrier foil (4) which is drawn into the grooves (3) is moved back into the plane of the mould surface by pressure and/or vacuum.

2. A process according to claim 1 characterised in that the mould cavity (8) is delimited by a positive and a negative mould (1) with a respective stretchable foil (4).

3. A process according to claim 1 characterised in that the mould cavity (8) is delimited by a stretchable foil (6) and a positive and/or negative mould (1) with a stretchable foil (4).

4. A process according to claim 1 characterised in that the mould cavity (8) is delimited by a blank component and a positive and/or negative mould (1) with a stretchable foil (4).

5. Apparatus for the production of a comparatively thin-walled and large-area moulding of hardenable, in particular laminated material, for example plastics material, comprising a positive and/or negative mould (1) and at least one stretchable foil (4) for forming a closed mould cavity (8) for receiving the material, which mould cavity can be subjected to the action of vacuum and/or pressure, in particular for carrying out the process according to at least one of claims 1 to 4, characterised in that the positive and/or the negative mould (1) is provided with a plurality of grooves (3) which are distributed over the mould surface (2) and that the grooves (3) are connected to a vacuum means for forming flow passages (7) within the mould cavity (8) which is delimited by the foil (4).

6. Apparatus according to claim 5 characterised in that the positive and/or negative mould (1) is formed by a blank component.

7. Apparatus according to claim 5 or claim 6 characterised in that the grooves (3) are of rectangular, trapezoidal, triangular and/or semicircular cross-section.

8. Apparatus according to at least one of claims 5 to 7 characterised in that the grooves (3) are arranged uniformly distributed over the mould surface.

9. Apparatus according to at least one of claims 5 to 8 characterised in that the grooves (3) are arranged parallel to each other.

10. Apparatus according to at least one of claims 5 to 8 characterised in that the grooves (3) are arranged in a circular configuration.

11. Apparatus according to at least one of claims 5 to 10 characterised in that the grooves (3) are arranged in a star configuration.

12. Apparatus according to at least one of claims 5 to 11 characterised in that the positive and/or negative mould (1) is formed by a grooved roller.

13. Apparatus according to at least one of claims 5 to 12 characterised in that the positive and/or negative mould (1) is formed by a grooved conveyor belt.

## Revendications

1. Procédé de fabrication d'une pièce de forme à paroi relativement mince et de grande surface à partir d'un matériau durcissable, notamment stratifié, par exemple une matière plastique, procédé dans lequel le matériau est introduit dans un volume de moulage (8) fermé, délimité par une feuille extensible (4) et un moule positif et/ou négatif (1) et dans lequel ce matériau est réparti par effet de vide et/ou de pression uniformément sur la surface de moule, caractérisé en ce que, dans un moule positif et/ou négatif (1) pourvu de rainures réparties (3), la feuille appliquée (4) par conjugaison de formes contre celui-ci soit engagée par effet de pression et/ou de vide au moins partiellement dans les rainures (3) et que les canaux d'écoulement (7) soient créés, que le matériau soit introduit uniformément, par l'intermédiaire des canaux d'écoulement (7) et avec effet de pression et/ou de vide, dans la cavité de moulage (8) et soit réparti sur la surface de moulage et qu'à la fin du processus de répartition ou de mise en forme, la feuille support (4) introduite dans les rainures (3) soit déplacée en retrait jusque dans le plan de la surface de moulage par effet de pression et/ou de vide.

2. Procédé selon la revendication 1, caractérisé en ce que le volume de moulage (8) est délimité par un moule positif et un moule négatif (1), pourvus respectivement d'une feuille extensible (4).

3. Procédé selon la revendication 1, caractérisé en ce que le volume de moulage (8) est délimité par une feuille extensible (6) et par un moule positif et/ou négatif (1) pourvu d'une feuille extensible (4).

4. Procédé selon la revendication 1, caractérisé en ce que le volume de moulage (8) est délimité par une préforme et un moule positif et/ou négatif (1) pourvu d'une feuille extensible (4).

5. Dispositif de fabrication d'une pièce de forme à paroi relativement mince et de grande surface, à partir d'un matériau durcissable, notamment stratifié, par exemple une matière plastique, le dispositif se composant d'un moule positif et/ou négatif (1) et d'au moins une feuille extensible (4) pour la création d'un volume de moulage (8) servant à recevoir le matériau, ce volume étant fermé et pouvant être sollicité par vide et/ou par pression, notamment pour la mise en oeuvre du procédé selon au moins une des revendications 1 à 4, caractérisé en ce que le moule positif et/ou le moule négatif (1) est pourvu de plusieurs rainures (3) réparties dans la surface de moulage (2) et en ce que les rainures (3) sont reliées à un dispositif générateur de vide pour la formation de canaux d'écoulement (7) à l'intérieur du volume de moulage (8) délimité par la feuille (4).

6. Dispositif selon la revendication 5, caractérisé en ce que le moule positif et/ou le moule négatif (1) est constitué par une préforme.

7. Dispositif selon la revendication 5 ou 6, caractérisé en ce que les rainures (3) ont une section rectangulaire, en forme de trapèze, en forme de triangle et/ou en forme de demi-cercle.

8. Dispositif selon au moins une des revendications 5 à 7, caractérisé en ce que les rainures (3) sont réparties uniformément dans la surface de moulage.

9. Dispositif selon au moins une des revendications 5 à 8, caractérisé en ce que les rainures (3) sont disposées en étant mutuellement parallèles.

10. Dispositif selon au moins une des revendications 5 à 8, caractérisé en ce que les rainures (3) sont disposées avec une forme circulaire.

11. Dispositif selon au moins une des revendications 5 à 10, caractérisé en ce que les rainures (3) sont disposées en forme d'étoile.

12. Dispositif selon au moins une des revendications 5 à 11, caractérisé en ce que le moule positif et/ou le moule négatif (1) est constitué par un cylindre rainuré.

13. Dispositif selon au moins une des revendications 5 à 12, caractérisé en ce que le moule positif et/ou le moule négatif (1) est constitué par une bande transporteuse rainurée.
